# EUROPÄISCHE PATENTANMELDUNG

(11) **EP 0 618 060 A1**
(43) Veröffentlichungstag der Anmeldung: **05.10.1994**
(21) Anmeldenummer: 94104080.0
(22) Anmeldetag: 16.03.1994
(51) Int. Cl.: B29C 47/44

(54) **Vorrichtung zum Plastifizieren von unidirektional faserverstärktem Thermoplastgranulat**

(30) Priorität: 30.03.1993 DE 4310253
(71) Anmelder: HOECHST AKTIENGESELLSCHAFT, D-65929 Frankfurt am Main (DE)
(72) Erfinder: Henning, Jürgen, D-65189 Wiesbaden (DE); Klein, Norbert, Dr., D-65843 Sulzbach (DE); Brüssel, Richard, Dl., D-75056 Sulzfeld (DE)

(57) **Zusammenfassung**

Bei der Vorrichtung zum Plastifizieren von mit langen Fasern verstärktem thermoplastischem Kunststoffgranulat ist im konischen Einlaufteil und zylinderförmigen Auslaufteil des Plastifizierrohres eine Plastifizierschnecke angeordnet. Das Auslaufteil (5) ist mit einer formgebenden, verschließbaren Düse (8) versehen und die Plastifizierschnecke (3) weist eine Einrichtung (6) zum axialen Verschieben der Schnecke (3) gegenüber dem Plastifizierrohr auf.

## Beschreibung

Die Erfindung betrifft eine Vorrichtung zum Plastifizieren von unidirektional faserverstärktem Thermoplastgranulat bestehend aus einem Plastifizierrohr, in dessen konischem Einlaufteil und zylinderförmigem Auslaufteil eine Plastifizierschnecke angeordnet ist.

Die Anwendungsmöglichkeiten thermoplastischer Kunststoffe lassen sich durch Einarbeiten von Verstärkungsfasern erweitern. Durch Zusatz langer Fasern (Faserlänge > 4 mm) können alle mechanischen Kennwerte thermoplastischer Kunststoffe deutlich verbessert werden. Während das Herstellen von Kunststoffgranulat mit Langfaserzusatz weitgehend gelöst ist, bereitet das Plastifizieren und Vorformen eines solchen Granulats nach wie vor Schwierigkeiten, da die Fasern bei Verwendung der bekannten Plastifiziereinrichtung geschädigt werden. Sie werden mechanisch zerkleinert. Hier will die Erfindung Abhilfe schaffen.

Die Aufgabe wird durch eine Vorrichtung der eingangs genannten Art gelöst, bei der das Auslaufteil mit einer formgebenden, verschließbaren Düse versehen ist und die Plastifizierschnecke eine Einrichtung zum axialen Verschieben der Schnecke gegenüber dem Plastifizierrohr aufweist.

Die Einrichtung zum axialen Verschieben der Plastifizierschnecke kann aus regelbaren Hydraulikzylindern bestehen. Die Hydraulikzylinder können am Plastifizierrohr befestigt sein und der Verschluß der Düse aus einem Guillotinemesser bestehen.

Während des Plastifiziervorgangs weicht die Plastifizierschnecke unter dem einstellbaren Staudruck aus. Nach Füllen und Öffnen der Düse läuft die Schnecke in umgekehrter Richtung gegen die Düse und drückt das Plastifikat aus.

Die Vorrichtung bietet im wesentlichen den Vorteil, daß das faserverstärkte Granulat von 10 bis 100 mm Länge und einer Dicke von 0,1 bis 50 mm mit Fasern von 10 bis 100 mm Länge und einer Dicke von 5 bis 30 µm schonend, d.h. ohne mechanische Zerkleinerung in den Plastifizierteil der Vorrichtung eingezogen, mit minimaler Scherbeanspruchung plastifiziert und nach dem Plastifizieren vorgeformt ausgestoßen wird. Da die Vorrichtung keine Toträume aufweist, werden thermische Schädigungen des plastifizierten Materials vermieden.

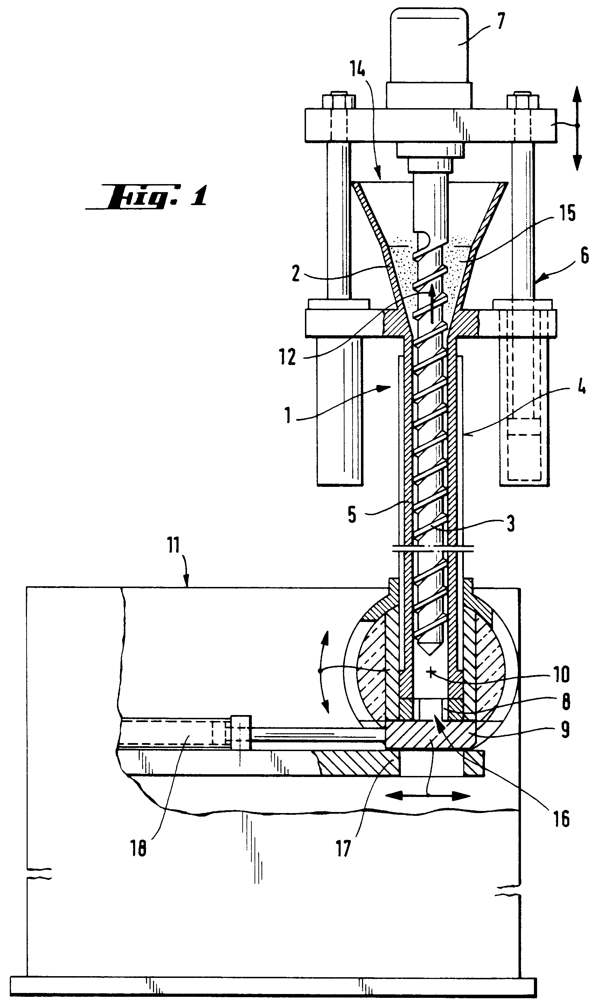

Im folgenden wird die Erfindung anhand der Figuren näher erläutert. Es zeigt
Figur 1 die Vorrichtung in Seitenansicht partiell geschnitten während des Füllens mit Material und

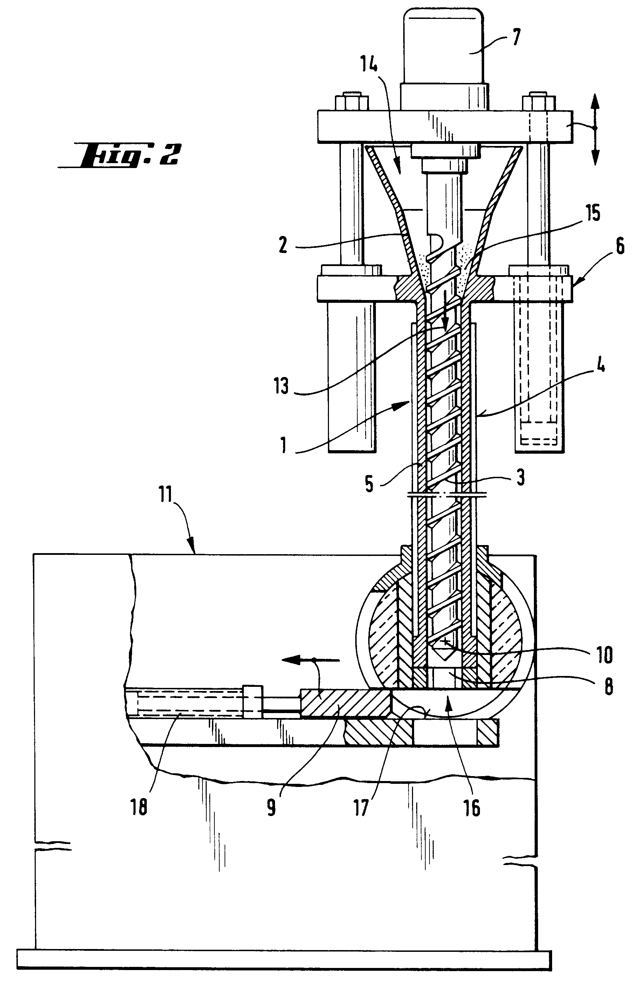

Figur 2 die Vorrichtung gemäß Figur 1 beim Ausstoßen des Plastifikats.

Die Vorrichtung zum Plastifizieren besteht aus einem Plastifizierrohr 1, in dessen konischem Einlaufteil 2 und zylinderförmigem Auslaufteil 5 eine Plastifizierschnecke 3 angeordnet ist. Die Vorrichtung kann vertikal, horizontal oder senkrecht zur Schneckenachse schwenkbar um die Achse 10 gelagert sein. Am Auslaufteil 5 ist eine formgebende Düse 8 angeordnet, der sich ein Verschlußelement 9 anschließt. Das Verschlußelement 9 kann aus einem Guillotinemesser bestehen. Die Plastifizierschnecke 3 wird mittels Antrieb 7 drehend angetrieben, an dem eine Einrichtung 6 zum axialen Verschieben der Schnecke 3 gegenüber dem Plastifizierrohr angeordnet ist. Die Einrichtung 6, z.B. regelbare Hydraulikzylinder stützen sich zusammen mit dem Plastifizierrohr 1 auf einem gemeinsamen Maschinenbett 11 ab oder wie dargestellt auf dem Plastifizierrohr 1. Das faserverstärkte Granulat 15 gelangt über Öffnung 14 in den konischen Einlaufteil 2 und wird von da mittels Plastifizierschnecke 3 gegen das Verschlußelement 9 getrieben, wobei es plastifiziert wird. Dabei baut sich ein Staudruck auf, dem die Schnecke 3 entgegen der Materialflußrichtung ausweicht, wie durch Pfeil 12 angedeutet. Nach Öffnen des Verschlußelementes 9 bewegt sich die Schnecke 3 in Richtung Öffnung 16 des Auslaufteiles 5 (Pfeil 13) und stößt das Plastifikat über die formgebende Düse 8 aus. Der Querschnitt der Düsenöffnung kann durch eine beliebige Kontur begrenzt sein, je nachdem welche Gestalt der Formling haben soll. 4 deutet eine Temperiereinrichtung (Heiz- oder Kühleinrichtung) für das Plastifizierrohr an. Mit 17 ist eine Abstützung für das Verschlußelement 9 und mit 18 eine hydraulische Antriebseinrichtung für dieses angedeutet.

## Patentansprüche

1. Vorrichtung zum Plastifizieren von mit langen Fasern verstärktem thermoplastischem Kunststoffgranulat bestehend aus einem Plastifizierrohr, in dessen konischem Einlaufteil und zylinderförmigem Auslaufteil eine Plastifizierschnecke angeordnet ist, dadurch gekennzeichnet, daß das Auslaufteil (5) mit einer formgebenden, verschließbaren Düse (8) versehen ist und die Plastifizierschnecke (3) eine Einrichtung (6) zum axialen Verschieben der Schnecke (3) gegenüber dem Plastifizierrohr aufweist.

2. Vorrichtung nach Anspruch 1, dadurch gekennzeichnet, daß die Einrichtung (6) zum axialen Verschieben der Plastifizierschnecke (3) aus regelbaren Hydraulikzylindern besteht.

3. Vorrichtung nach Anspruch 2, dadurch gekennzeichnet, daß die Hydraulikzylinder am Plastifizierrohr befestigt sind.

4. Vorrichtung nach Anspruch 1, dadurch gekennzeichnet, daß das Verschlußelement (9) der Düse (8) aus einem Guillotinemesser besteht.
